(19) Europäisches Patentamt
European Patent Office
Office européen des brevets

(11) **EP 3 358 824 B1**

(12) **EUROPÄISCHE PATENTSCHRIFT**

(45) Veröffentlichungstag und Bekanntmachung des Hinweises auf die Patenterteilung:
**14.08.2019   Patentblatt 2019/33**

(51) Int Cl.:
*H04N 5/272* *(2006.01)*       *H04N 9/75* *(2006.01)*
*G06Q 30/02* *(2012.01)*       *G06T 7/90* *(2017.01)*

(21) Anmeldenummer: **17164241.6**

(22) Anmeldetag: **31.03.2017**

(54) **VERFAHREN ZUM ERSETZEN VON BILDINHALTEN**

METHOD FOR THE REPLACEMENT OF IMAGE CONTENTS

PROCÉDÉ DE REMPLACEMENT DE CONTENUS D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2017   EP 17154482**

(43) Veröffentlichungstag der Anmeldung:
**08.08.2018   Patentblatt 2018/32**

(73) Patentinhaber: **Fraunhofer-Gesellschaft zur Förderung der angewandten Forschung e.V.**
**80686 München (DE)**

(72) Erfinder:
• **Eickeler, Stefan**
  **53225 Bonn (DE)**
• **Möller, Ronja**
  **53111 Bonn (DE)**
• **Nütten, Ulrich**
  **53225 Bonn (DE)**
• **Wollsiefen, Rainer**
  **53229 Bonn (DE)**
• **Vonolfen, Wolfgang**
  **53225 Bonn (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
WO-A1-2007/097517       DE-B4- 4 492 448
GB-A- 2 312 348       US-A- 5 398 075

EP 3 358 824 B1

**Beschreibung**

Die Erfindung betrifft ein Verfahren zum Ersetzen von graphischen Inhalten in von einer Kamera aufgenommenen Bildern einer Szenerie, wobei der zu ersetzende graphische Inhalt ein Abbild zumindest eines Merkmals in der Szenerie ist, dessen Farbe ein oder mehrere Primärfarben sind.

Bei der internationalen Übertragung von Sport- oder anderen Veranstaltungen hat der virtuelle Ersatz von vorhandenen Werbeflächen durch nationale Versionen ein großes Marktpotential. Eine wichtige Randbedingung ist, dass nach gültigem Recht normalerweise keine zusätzlichen Werbeflächen eingeblendet werden dürfen. Die virtuelle Werbung darf daher nur sichtbare Werbung ersetzen. Dies stellt in den gängigen Kontexten ein schwieriges Problem dar.

Verfahren zum Ersetzen von Inhalten in Videobildern sind in den Patentdokumenten GB2312348, WO2007/097517 und DE4492448 offenbart. Eine bekannte Lösung zum Ersetzen von Bandenwerbung wird in der WO 2012/038009 beschrieben. Hier wird eine einfarbige Werbefläche anhand einer Codierung im Kamerabild detektiert. Der ersetzende Bandeninhalt kann dann unter Nutzung der Abmessungen der detektierten Werbefläche gerendert werden und der gerenderte Bandeninhalt durch Chroma-Keying mit einem gemessenen Farbwert mit dem Bild der Kamera kombiniert werden.

Die Lösung der WO 2012/038009 setzt eine Codierung des Bandenbildes voraus.

Aufgabe der vorliegenden Erfindung ist es, ein Verfahren zur Ersetzung von graphischen Inhalten in von einer Kamera aufgenommenen Bildern einer Szenerie anzugeben, das graphische Inhalte in durch eine Kamera aufgenommenen Bildern ersetzen kann, ohne dass diese Inhalte einer über den eigentlichen graphischen Gehalt hinausgehenden Kennzeichnung bedürften.

Die Aufgabe wird gelöst durch das Verfahren zum Ersetzen zumindest eines zu ersetzenden graphischen Inhalts durch zumindest einen ersetzenden graphischen Inhalt nach Anspruch 1. Die abhängigen Ansprüche geben vorteilhafte Weiterbildungen des Verfahrens nach Anspruch 1 an.

Erfindungsgemäß wird ein Verfahren zum Ersetzen zumindest eines graphischen Inhalts, der hier als zu ersetzender graphischer Inhalt bezeichnet werden soll, durch zumindest einen graphischen Inhalt, der hier als ersetzender graphischer Inhalt bezeichnet werden soll, in zumindest einem von einer Kamera aufgenommenen Bild einer Szenerie aufgegeben. Dabei kann die Kamera vorteilhaft eine elektronische Kamera sein, die in ihre Linse einfallendes Licht mittels eines elektronischen Bildsensors, wie zum Beispiel einem CCD-Sensor oder einem CMOS-Sensor, in elektrische Signale umwandelt.

Erfindungsgemäß ist der zumindest eine zu ersetzende graphische Inhalt ein Abbild zumindest eines Merkmals in der Szenerie. Das Abbild ist hierbei das von der Kamera erzeugte Abbild des Merkmals in der Szenerie. Das Merkmal in der Szenerie kann beispielsweise eine Bande in einem Stadion sein, so dass der graphische Inhalt, der Abbild der Bande ist, die Darstellung der Bande in dem von der Kamera aufgenommenen Bild ist.

Das erfindungsgemäße Verfahren geht davon aus, dass das Merkmal in der Szenerie farbig ist, wobei seine Farben zumindest in jenem Bereich, der im Bild der Kamera ersetzt werden soll, nur Primärfarben sind. Das Merkmal kann insbesondere aus einer Mehrzahl einfarbiger Bereiche zusammengesetzt sein, wobei die Bereiche jeweils genau eine Primärfarbe haben. Zwar bedeutet die Beschränkung des zu ersetzenden Inhalts auf Primärfarben eine gewisse Einschränkung für die Ausgestaltung beispielsweise von Bandengrafiken, andererseits sind in zahlreichen Ländern die Bandenwerbungen ohnehin auf wenige Farben beschränkt, und auch zahlreiche Sportarten erfordern Bandenwerbungen mit nur wenigen Farben, da andernfalls beispielsweise die Erkennbarkeit des Balls beeinträchtigt wäre, wie beispielsweise beim Tennis.

Unter Primärfarben werden hier die Farben Rot, Grün, Blau, Cyan, Magenta und Gelb verstanden. Eine Farbe kann vorteilhaft als RGB-Tupel mit Werten zwischen 0.0 und 1.0 dargestellt werden. Die Primärfarben sind dann jene Farben, bei denen das RGB-Triple entweder zweimal 0.0 und einmal 1.0 oder einmal 0.0 und zweimal 1.0 enthält. Die Beschränkung auf diese sechs Farben ermöglicht im Vergleich zu anderen Farben eine leichtere Erkennung im Bild, da sich diese in den Ecken des RGB-Farbwürfels befinden. Es ist allerdings damit nicht gesagt, dass die Färbung des Objektes in der Szene beispielsweise einhundert Prozent reine Primärfarbe sein muss. Dies hängt von den Lichtverhältnissen der realen Szene sowie den Farbeinstellungen der aufzeichnenden Kamera ab (verbauter Farbmatrix-Chip, Ergebnisse des Farbabgleichs vor der Produktion, Blendeneinstellungen oder auch verwendete Belichtungszeiten während der Produktion). Die exakte Wahl der Farbe sollte letztlich im aufgezeichneten Bild möglichst nahe an eine der Primärfarben herankommen. Ebenso ist es denkbar, durch Einsatz eines Chips mit anderen Farbempfindlichkeiten in der Kamera einen anderen Farbwürfel als RGB zu erhalten und dadurch eine Kombination anderer Farben als die sechs oben genannten zu ermöglichen. In diesem Falle würden diese anderen Farben als Primärfarben angesehen werden.

Erfindungsgemäß wird nun in einem ersten Schritt zumindest für jene Primärfarben, die Farben des Merkmals sind, jeweils eine Intensitätsmaske erzeugt. Weist also das Merkmal ein oder mehrere der Primärfarben auf, so wird für jede der Primärfarben im ersten Schritt eine Intensitätsmaske erzeugt. Die Intensitätsmaske kann stets für alle sechs Primärfarben erzeugt werden, es ist grundsätzlich jedoch ausreichend, die Intensitätsmaske nur für jene Primärfarben zu erzeugen, die im Merkmal tatsächlich auftreten, sofern dies vorab bekannt ist.

In einem dem ersten Schritt nachfolgenden zweiten Schritt wird dann aus allen im ersten Schritt erzeugten Intensitätsmasken eine Graustufenmaske berechnet. In einem einfachen Fall kann beispielsweise die Graustufenmaske einfach die gewichtete Summe der Intensitätsmasken sein.

Es kann dann der zu ersetzende Inhalt entsprechend der Graustufenmaske in dem von der Kamera aufgenommenen Bild durch den ersetzenden Inhalt ersetzt werden. Dabei existieren verschiedene Möglichkeiten, wie die Graustufenmaske verwendet werden kann, um den zu ersetzenden Inhalt durch den ersetzenden Inhalt zu ersetzen. In einem einfachen Beispiel kann die Graustufenmaske als Transparenzmaske interpretiert werden, so dass jede Graustufe als eine Transparenz interpretiert wird. Der ersetzenden grafische Inhalt kann dann unter das Kamerabild gelegt werden und das Kamerabild kann entsprechend der Graustufenmaske oder Transparenzmaske transparent gemacht werden, so dass je höher der Wert der Transparenz in einem bestimmten Pixel ist, desto größer der Anteil des ersetzenden graphischen Inhalts am entstehenden Bild ist.

Bevorzugterweise kann das Merkmal die Farben Grün und Magenta oder Rot und Blau haben. Dies ist insbesondere bevorzugt, wenn der Kamerasensor ein Bayer-Pattern aufweist, da in diesem aus vier Farbsensoren eines Pixels jeweils zwei grün sind, einer blau und einer rot. Hat das Merkmal die genannten Farben Grün und Magenta oder Rot und Blau, so werden sie von einem Kamerasensor mit Bayern-Pattern mit gleicher Intensität aufgenommen.

Als Intensitätsmaske und Graustufenmaske werden hier Masken bezeichnet, in denen jeder Pixel einen bestimmten Wert hat. Pixel der Masken entsprechen dabei Pixeln des aufgenommenen Kamerabildes. Die Masken können also pixelweise aus den Werten der Pixel des Kamerabildes berechnet werden. Es ist grundsätzlich nicht erforderlich, dass die Masken sich über das gesamte aufgenommene Kamerabild erstrecken. Es kann auch ausreichend sein, wenn die Masken nur für jene Bereiche des aufgenommenen Kamerabildes erzeugt oder berechnet werden, in denen das Merkmal tatsächlich abgebildet wird oder zu erwarten ist. Dies kann beispielsweise durch Einsatz eines Kamera-Trackings erreicht werden, mit dessen Hilfe sich die Merkmalsabbildung im Bild zu einem gewissen Grade vorherbestimmen lässt. Die Masken können jedoch auch jeweils für das gesamte von der Kamera aufgenommene Bild erzeugt werden.

In einer vorteilhaften Ausgestaltung der Erfindung können im ersten Schritt die Intensitätsmasken zumindest für jene Primärfarben, die Farben des zumindest einen Merkmals sind, erzeugt werden, indem für die Pixel zumindest jenes Bereichs des Bildes der Kamera, der betrachtet werden soll, jeweils Intensitätswerte $E_{farbe}$ erzeugt werden, wobei der Index "farbe" die Farben Rot, Grün, Blau, Cyan, Magenta oder Gelb bezeichnet. Es kann in dieser Ausgestaltung für jeden Pixel der folgender Intensitätswert berechnet werden:

$$E_{rot} = max(0, R - max(G, B))$$

$$E_{grün} = max(0, G - max(R, B))$$

$$E_{blau} = max(0, B - max(R, G))$$

$$E_{cyan} = max(0, min(G, B) - R)$$

$$E_{magenta} = max(0, min(R, B) - G)$$

$$E_{gelb} = max(0, min(R, G) - B).$$

Dabei ist R ein Rotanteil, G ein Grünanteil und B ein Blauanteil des betrachteten Pixels. Es können diese Intensitätsmasken für alle sechs Primärfarben berechnet werden oder nur für jene Primärfarben, die im Merkmal tatsächlich auftreten.

In einer vorteilhaften Ausgestaltung der Erfindung kann die Graustufenmaske aus den berechneten Intensitätsmasken $E_{farbe}$ berechnet werden, in dem für jeden Pixel des betrachteten Bereichs des Bildes eine Graustufe E wie folgt berechnet wird:

$$E = f_{rot}*E_{rot} + f_{grün}*E_{grün} + f_{blau}*E_{blau} + f_{cyan}*E_{cyan} + f_{magenta}*E_{magenta} + f_{gelb}*E_{gelb}.$$

In einer alternativen vorteilhaften Ausgestaltung der Erfindung kann die Graustufenmaske auch berechnet werden, indem für die Pixel des Bereichs des Bildes aus den Intensitätswerten $E_{farbe}$ jeweils die Graustufe E wie folgt berechnet wird:

$$E = \max(f_{rot} * E_{rot}, f_{grün} * E_{grün}, f_{blau} * E_{blau}, f_{cyan} * E_{cyan}, f_{magenta} * E_{magenta}, f_{gelb} * E_{gelb}).$$

In beiden Alternativen sind $f_{rot}$, $f_{grün}$, $f_{blau}$, $f_{cyan}$, $f_{magenta}$, $f_{gelb}$ Gewichtungsfaktoren, mittels derer Beiträge solcher Farben aus der Graustufenmaske entfernt werden können, von denen bekannt ist, dass sie im Merkmal nicht auftreten. Dies kann dadurch geschehen, dass der entsprechende Gewichtungsfaktor f auf Null gesetzt wird.

In einer vorteilhaften Ausgestaltung der Erfindung können die Gewichtungsfaktoren $f_{farbe}$ in einem vorgelagerten Kalibrierschritt festgelegt werden. Dabei kann die Szenerie mit der Kamera so aufgenommen werden, dass das Abbild des zumindest einen Merkmals nur jene Primärfarben hat, die Farben des Merkmals sind. Die Szenerie kann mit optimaler Beleuchtung bzw. unter optimalen Bedingungen aufgenommen werden. Die Gewichtungsfaktoren können dann so festgelegt werden, dass die gewichteten Intensitäten, die im Merkmal vorkommen, gleich verteilt werden.

Eine der Primärfarben kann beispielsweise im Vergleich zu einer anderen Primärfarbe je nach den Lichtverhältnissen in der realen Szene oder Kameraeinstellungen (Farbmatrix, Farbabgleich, Blende, etc.) weniger intensiv oder weniger rein aufgezeichnet werden und damit in der Intensitätsmaske geringere Werte hervorrufen, was unter anderem Konturen der Übergänge zwischen den beiden Primärfarben in der Graustufenmaske hinterlässt. Ziel der Kalibrierung ist der Ausgleich solcher Unterschiede, so dass alle Farben, die im zu ersetzenden graphischen Inhalt vorkommen, gleich gekeyt werden. In der Konsequenz lässt sich dann der Chroma-Keyer über einen einzigen Regler für alle Primärfarben zusammen weiter einstellen.

Eine Kalibrierung kann beispielsweise über die Aufnahme des Merkmals in der Szene im Kamerabild frontal, bildfüllend mit allen vorkommenden Primärfarben und mit gleichmäßiger Ausleuchtung erfolgen. Die unterschiedlichen Intensitätsdurchschnitte aller Farben über alle das Merkmal zeigenden Pixel werden dann zur Angleichung entsprechend umgekehrt gewichtet (d.h. ein höherer Intensitätsdurchschnitt einer Primärfarbe im Vergleich zu einer anderen Primärfarbe erzeugt einen kleineren Gewichtungsfaktor).

In einer vorteilhaften Ausgestaltung der Erfindung kann die Graustufenmaske verwendet werden, um in der Graustufenmaske eine Objekterkennung auszuführen. Durch die Objekterkennung kann bestimmt werden, welcher Bereich des von der Kamera aufgenommenen Bildes das zumindest eine Merkmal der Szenerie abbildet. Vorteilhafterweise kann dann für jede der Primärfarben, die im Merkmal vorkommen, ein Durchschnitt der entsprechenden Farbe über alle Pixel innerhalb des Abbilds des Merkmals gebildet werden. Es können also die Farbwerte eines Teils oder aller der Pixel, die in der Abbildung des Merkmals liegen, addiert werden und durch die Anzahl dieser Pixel geteilt werden. Vorteilhafterweise kann dann die so erhaltene durchschnittliche Primärfarbe verwendet werden, um den zu ersetzenden Inhalt mittels Chroma-Keyings durch den ersetzenden Inhalt unabhängig von Lichtverhältnissen oder Kameraeinstellungen zu ersetzen.

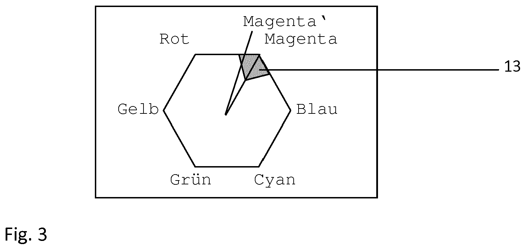

Bei Einsatz eines Chroma-Key-Verfahrens beispielsweise wie in [Keith Jack, Video Demystified - A Handbook for the Digital Engineer, Elsevier 2007, ISBN: 978-0-7506-8395-1] beschrieben ergibt sich dadurch eine leicht veränderte Hauptachse der Key-Farbe. Das Grau unterlegte Feld 13 in Figur 3 beschreibt alle Magentafarbtöne im Farbkreis nach diesem Verfahren, welche zu Transparenzen und damit zu Ersetzungen führen. Mit der durchschnittlichen Primärfarbe erhält man eine leichte Anpassung der Key-Achse von Magenta zu Magenta'. Alles im Bereich 13 wird als 100% transparent betrachtet.

Wurde auf diese Weise eine Objekterkennung zur Bestimmung des Merkmals im Bild der Kamera durchgeführt, so kann vorteilhafterweise das Chroma-Keying auf jenen Bereich des Bildes beschränkt werden, der das Merkmal abbildet oder auf einen Bereich, von dem das Abbild des Merkmals ein Teilbereich ist. Vorteilhaft kann dann ein feinparametrisiertes Chroma-Keying verwendet werden, das in der Chrominanz-Ebene des YCbCr-Farbraums arbeitet.

Das erfindungsgemäße Verfahren kann in Einzelbildern oder Standbildern durchgeführt werden. Vorteilhafterweise werden jedoch Inhalte in Videosequenzen ersetzt. Das zumindest eine von der Kamera aufgenommene Bild kann dann ein Frame eines solchen Bewegtbildes sein. Das beschriebene Verfahren kann dabei für jeden Frame erneut ausgeführt werden.

In einer vorteilhaften Ausgestaltung kann jedoch der beschriebene Durchschnitt der Farbwerte der Pixel auch über mehrere aufeinanderfolgende Frames gebildet werden. In diesem Falle werden also die Farbwerte der entsprechenden Pixel über eine Mehrzahl von Frames summiert und durch die Anzahl der Pixel multipliziert mit der Anzahl der betrachteten Frames geteilt. Diese Berechnungsvorschrift kann je nach Situation abweichen, wenn beispielsweise ein schneller Reißschwenk die Bildinhalte in der Folge zu stark springen lässt.

Im Folgenden soll die Erfindung anhand einiger Figuren beispielhaft erläutert werden. Die in den Beispielen beschriebenen Merkmale können dabei unabhängig von dem spezifischen Beispiel realisiert sein und unter den Beispielen kombiniert werden.

Es zeigt

Figur 1    einen beispielhaften Ablauf des erfindungsgemäßen Verfahrens bis zur Berechnung einer Graustufenmaske,

Figur 2    einen Ablauf des erfindungsgemäßen Verfahrens zum Ersetzen eines zu ersetzenden graphischen Inhalts durch einen ersetzenden graphischen Inhalt ausgehend von der Graustufenmaske,

Figur 3    eine Anordnung der Primärfarben in einem Diagramm, in dem die Farbpalette aufgetragen ist. Die 6 Ecken entsprechen den Primärfarben.

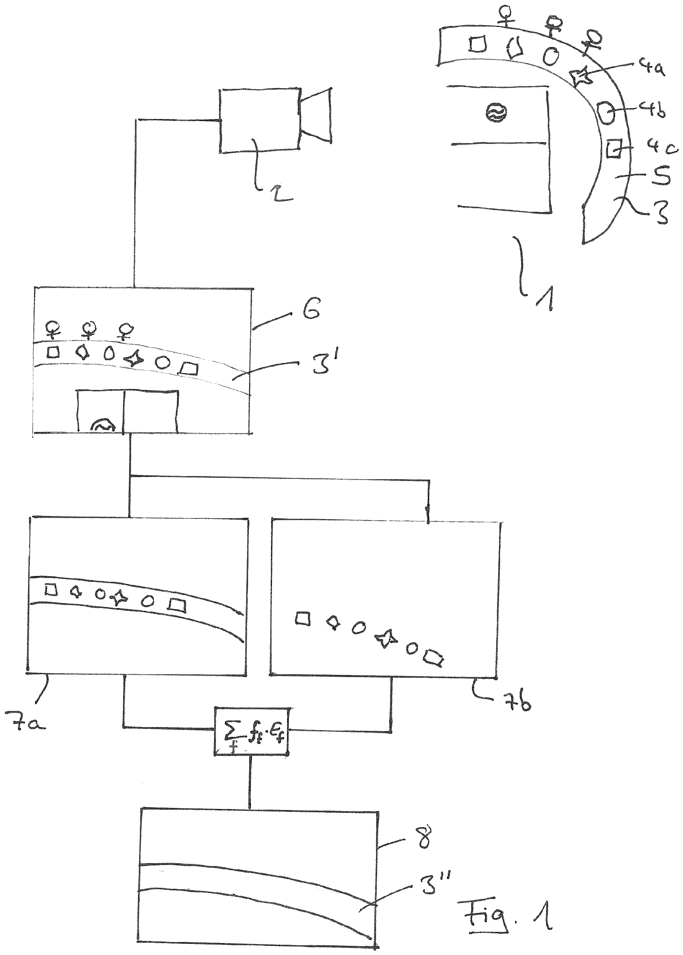

Im in Figur 1 gezeigten Beispiel des erfindungsgemäßen Verfahrens wird zunächst mittels einer Kamera 2 ein Bild oder einer Bildfolge einer Szenerie 1 aufgenommen. Dabei enthält die Szenerie 1 zumindest ein Merkmal 3, hier eine Bande 3, dessen Farben Primärfarben sind.

Es soll im Folgenden angenommen werden, dass die Bande 3 blaue Figuren 4a, 4b, 4c auf einem roten Hintergrund 5 zeigt. Andere Merkmale der Szenerie, die nicht zu ersetzen sind, umfassen beispielsweise Personen, ein Sportfeld und einen Ball.

Die Kamera 2 erzeugt, beispielsweise mittels eines elektronischen Sensors, ein Kamerabild 6 der Szenerie 1. Das Kamerabild 6 zeigt ein Abbild 3' des Merkmals 3 sowie Abbilder der anderen Merkmale der Szenerie 1. Das erfindungsgemäße Verfahren soll nun das Abbild 3' des Merkmals 3 als zu ersetzenden graphischen Inhalt mit einem ersetzenden graphischen Inhalt ersetzen.

Es wird hierzu in einem ersten Schritt zumindest für jede Primärfarbe, die Farbe des Merkmals ist, also im gezeigten Beispiel zumindest für Rot und für Blau, eine Intensitätsmaske 7a und 7b erzeugt. Dabei ist die Intensitätsmaske 7a die Intensitätsmaske für die Farbe Rot des Hintergrunds 5 und 7b die Intensitätsmaske für die Farbe Blau des Vordergrunds 4a, 4b, 4c. Die Intensitätsmasken 7a, 7b können hierbei für alle Primärfarben erzeugt werden oder für jene, von denen bekannt ist, dass sie im zu ersetzenden Inhalt 3' auftreten. Die Intensitätswerte $E_{farbe}$ können nach den folgenden Formeln berechnet werden:

$$E_{rot} = max(0, R - max(G, B))$$

$$E_{grün} = max(0, G - max(R, B))$$

$$E_{blau} = max(0, B - max(R, G))$$

$$E_{cyan} = max(0, min(G, B) - R)$$

$$E_{magenta} = max(0, min(R, B) - G)$$

$$E_{gelb} = max(0, min(R, G) - B)$$

Dabei ist R ein Rotwert, G ein Grünwert und B ein Blauwert des Bildes 6 der Kamera 2 im entsprechenden Pixel. Die Intensitätswerte $E_{farbe}$ können im gezeigten Beispiel für alle Pixel des Bildes 6 bestimmt werden. Es ist aber auch möglich, diese Bestimmung auf einen Teilbereich des Bildes 6 zu beschränken, von dem bekannt ist, dass in ihm das zu ersetzende Merkmal 3' vollständig vorliegt. Ein solches Vorwissen kann beispielsweise bei Einsatz eines Kamera-Trackings generiert werden.

Aus den Intensitätsmasken 7a und 7b kann nun eine Graustufenmaske 8 berechnet werden, indem für jeden Pixel ein Grauwert E berechnet wird als

$$E = f_{rot}*E_{rot} + f_{grün}*E_{grün} + f_{blau}*E_{blau} + f_{cyan}*E_{cyan} + f_{magenta}*E_{magenta} + f_{gelb}*E_{gelb}$$

oder alternativ als

$$E = max(f_{rot}*E_{rot}, f_{grün}*E_{grün}, f_{blau}*E_{blau}, f_{cyan}*E_{cyan}, f_{magenta}*E_{magenta}, f_{gelb}*E_{gelb}),$$

wobei $f_{rot}$, $f_{grün}$, $f_{blau}$, $f_{cyan}$, $f_{magenta}$, $f_{gelb}$ Gewichtungsfaktoren für die jeweiligen Farben sind. In der Graustufenmaske haben jene Pixel einen von Null verschiedenen Wert, an denen eine der Keying-Farben, d. h. der Primärfarben, die im Merkmal auftreten, im von der Kamera aufgenommenen Bild 6 vorliegt. Durch Setzen der Vorfaktoren f auf Null können jene Farben von vorneherein als nicht beitragend gesetzt werden, von denen bekannt ist, dass sie nicht im zu ersetzenden graphischen Inhalt auftreten.

Grundsätzlich ist es möglich, die Graustufenmaske 8 als Transparenzmaske 8 anzusehen und mit ihr ein Keying durchzuführen, wobei jene Pixel mit hohen Werten bzw. Grauwerten hohe Transparenz haben. Der Grauwert kann als gleich dem Transparenzwert oder proportional zum Transparenzwert angesehen werden. Ebenso kann man die Regionen mit vollständiger Transparenz, mit vollständiger Deckung oder einen Übergang davon festlegen. Das heißt, Regionen mit vollständiger Transparenz oder 100% Ersatz werden maximaler Intensität zugeordnet und Regionen ohne Transparenz bzw. ohne Ersatz werden Null Transparenz zugeordnet. Dazwischen kann die Zuordnung proportional, vorzugsweise mit Farbkorrektur erfolgen. Die Ermittlung der jeweiligen Grenzwerte kann wie auch schon für die Gewichtungsfunktionen f in einem Kalibrierschritt erfolgen, indem man beispielsweise die Häufigkeitsverteilung der Intensitäten einer Primärfarbe analysiert.

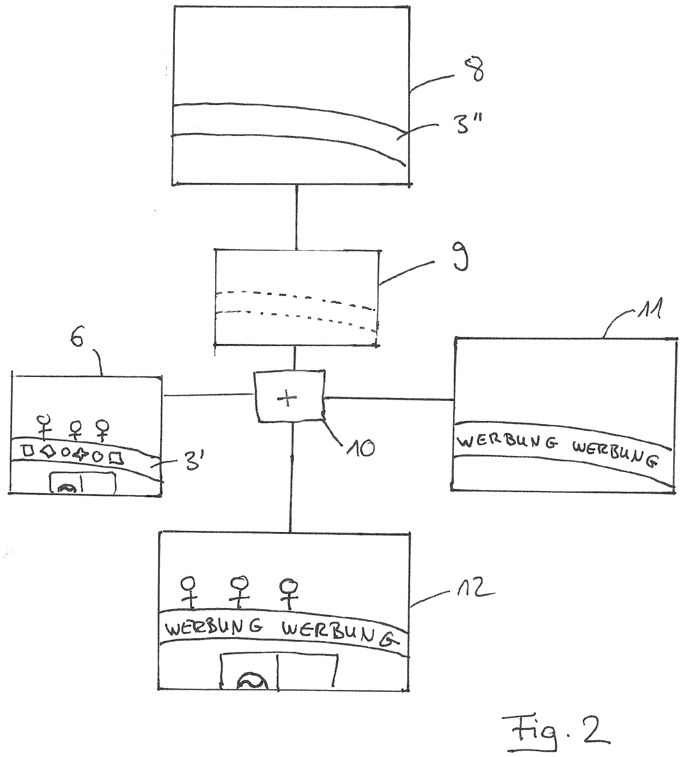

Vorteilhafterweise wird jedoch die Grauwertmaske 8 wie in Figur 2 gezeigt verwendet, um in der Graustufenmaske 8 eine Objekterkennung auf den Bereich des Vorliegens der Abbildung des Merkmals 3', der in Figur 1 und 2 als 3" gekennzeichnet ist, auszuführen. Der Objekterkennungsschritt 9 zur Erkennung des Objektes 3" (in Schritt 9 gestrichelt dargestellt) in der Graustufenmaske 8 führt zur Kenntnis jener Pixel der Graustufenmaske 8, an denen die Bande 3' im von der Kamera 2 aufgenommenen Bild 6 vorliegt.

Nach Durchführung der Objekterkennung kann im Schritt 9 nun für jene Pixel, die als zum zu ersetzenden Inhalt 3' gehörend identifiziert wurden, für die in dem Inhalt 3' auftretenden Primärfarben jeweils ein Durchschnittswert dieser Primärfarben bestimmt werden. Diese durchschnittlichen Primärfarben können dann in Schritt 10 verwendet werden, um im von der Kamera aufgenommenen Bild 6 mittels Chroma-Keying den zu ersetzenden Inhalt 3' mit dem ersetzenden Inhalt 11 zu ersetzen, um ein Ausgabebild 12 zu erzeugen.

Bevorzugt kann hierzu der ersetzende Inhalt 11 über Zoom, Pan, usw. der Kamera 2 so umgerechnet werden, dass seine perspektivischen Eigenschaften mit dem zu ersetzenden Inhalt im Kamerabild 6 der original Szene übereinstimmen. Diese perspektivische Anpassung des ersetzenden Inhalts kann anhand der perspektivischen Verzerrung des zu ersetzenden Inhalts im aufgezeichneten Bild, anhand von Sensor-Werten eines Kamera-Trackings, anhand einer Kombination aus Vorwissen zur Szenerie mit erkannten Eigenschaften des Merkmals im Kamerabild oder auch anhand einer Kombination des vorgenannten erfolgen.

## Patentansprüche

**1.** Verfahren zum Ersetzen zumindest eines zu ersetzenden graphischen Inhalts durch zumindest einen ersetzenden graphischen Inhalt in zumindest einem von einer Kamera aufgenommenen Bild einer Szenerie, wobei der zumindest eine zu ersetzende graphische Inhalt ein Abbild zumindest eines Merkmals in der Szenerie ist, wobei eine Farbe oder Farben des zumindest einen Merkmals zumindest eine Primärfarbe sind,
wobei
in einem ersten Schritt zumindest für jede Primärfarbe, die Farbe des Merkmals ist, jeweils eine Intensitätsmaske erzeugt wird,
und in einem zweiten Schritt aus allen im ersten Schritt erzeugten Intensitätsmasken eine Graustufenmaske berechnet wird,
und wobei der zu ersetzende Inhalt entsprechend der Graustufenmaske in dem von der Kamera aufgenommen Bild durch den ersetzenden Inhalt ersetzt wird,
wobei im ersten Schritt die Intensitätsmasken für die Primärfarben, die Farben des Merkmals sind, erzeugt werden, indem für die Pixel zumindest eines Bereichs des Bildes der Kamera jeweils Intensitätswerte

$$E_{rot} = max(0, R - max(G, B))$$

$$E_{grün} = max(0, G - max(R, B))$$

$$E_{blau} = max(0, B - max(R, G))$$

$$E_{cyan} = max(0, min(G, B) - R)$$

$$E_{magenta} = max(0, min(R, B) - G)$$

$$E_{gelb} = max(0, min(R, G) - B)$$

berechnet werden,
wobei R ein Rotwert, G ein Grünwert und B ein Blauwert des Bildes der Kamera im entsprechenden Pixel ist,
wobei die Graustufenmaske berechnet wird, indem für die Pixel des Bereichs des Bildes aus den Intensitätswerten jeweils die Graustufe

$$E = f_{rot}*E_{rot} + f_{grün}*E_{grün} + f_{blau}*E_{blau} + f_{cyan}*E_{cyan} + f_{magenta}*E_{magenta} + f_{gelb}*E_{gelb}$$

berechnet wird,
wobei $f_{rot}$, $f_{grün}$, $f_{blau}$, $f_{cyan}$, $f_{magenta}$, $f_{gelb}$
Gewichtungsfaktoren sind, oder
wobei die Graustufenmaske berechnet wird, indem für die Pixel des Bereichs des Bildes aus den Intensitätswerten jeweils die Graustufe

$$E = max(f_{rot}*E_{rot}, f_{grün}*E_{grün}, f_{blau}*E_{blau}, f_{cyan}*E_{cyan}, f_{magenta}*E_{magenta}, f_{gelb}*E_{gelb})$$

berechnet wird,
wobei $f_{rot}$, $f_{grün}$, $f_{blau}$, $f_{cyan}$, $f_{magenta}$, $f_{gelb}$
Gewichtungsfaktoren sind.

2. Verfahren nach einem der vorhergehenden Ansprüche,
   wobei das Merkmal die Farben Grün und Magenta oder Rot und Blau hat.

3. Verfahren nach einem der vorhergehenden Ansprüchen,
   wobei die Gewichtungsfaktoren jener Farben gleich Null gesetzt werden, die in dem Merkmal nicht vorhanden sind.

4. Verfahren nach einem der vorhergehenden Ansprüche,
   wobei die Gewichtungsfaktoren in einem vorgelagerten Kalibrierschritt festgelegt werden, in welchem die Szenerie mit der Kamera so aufgenommen wird, dass das Abbild des zumindest einen Merkmals nur jene Primärfarben hat, die Farben des Merkmals sind, und die Gewichtungsfaktoren so festgelegt werden, dass alle Farben, die Farben des Merkmals sind, bei Anwendung des jeweiligen Gewichtungsfaktors eine gleiche Intensitätsverteilung haben.

5. Verfahren nach einem der vorhergehenden Ansprüche,
   wobei in der Graustufenmaske eine Objekterkennung ausgeführt wird, durch welche bestimmt wird, welcher Bereich des von der Kamera aufgenommenen Bildes das zumindest eine Merkmal der Szenerie abbildet, und für jene Primärfarben, die Farben des Merkmals sind, jeweils ein Durchschnitt der entsprechenden Farbe aller Pixel, die Teil des Bereichs sind, der das zumindest eine Merkmal abbildet, berechnet wird, und der ersetzende Inhalt mittels Chroma-Keying auf die berechneten Durchschnitte der Primärfarben ersetzt wird.

6.  Verfahren nach dem vorhergehenden Anspruch,
    wobei das Chroma-Keying nur in jenem Bereich des Bildes ausgeführt wird, der als zum Abbild des Merkmals gehörend bestimmt wurde.

7.  Verfahren nach einem der vorhergehenden Ansprüche,
    wobei die Kamera eine Videokamera ist, die eine Vielzahl von Frames aufnimmt, und das Verfahren für jeden der Frames ausgeführt wird.

8.  Verfahren nach dem Ansprüche 5 bis 7,
    wobei der Durchschnitt über eine Mehrzahl an aufeinanderfolgenden Frames berechnet wird.


**Claims**

1.  A method of replacing at least one piece of graphical content to be replaced with at least one piece of replacing graphical content in at least one image of a scene recorded by a camera,
    wherein the at least one piece of graphical content to be replaced is an image of at least one feature in the scene, with a color or colors of the at least one feature being at least one primary color;
    wherein,
    in a first step, a respective intensity mask is produced at least for every primary color that is a color of the feature; and in a second step a gray scale mask is calculated from all the intensity masks produced in the first step;
    and wherein the content to be replaced is replaced by the replacing content in accordance with the gray scale mask in the image recorded by the camera,
    wherein, in the first step, the intensity masks for the primary colors that are colors of the feature are produced in that respective intensity values

$$E_{red} = max(0, R - max(G, B))$$

$$E_{green} = max(0, G - max(R, B))$$
$$E_{blue} = max(0, B - max(R, G))$$

$$E_{cyan} = max (0, min(G, B) - R)$$

$$E_{magenta} = max (0, min(R, B) - G)$$

$$E_{yellow} = max (0, min(R, G) - B)$$

are calculated for the pixels of at least one region of the image of the camera,
where R is a red value; G is a green value; and B is a blue value of the image of the camera in the corresponding pixel,
wherein the gray scale mask is calculated in that the respective gray scale

$$E = f_{red}*E_{red} + f_{green}*E_{green} + f_{blue}*E_{blue} + f_{cyan}*E_{cyan} + f_{magenta}*E_{magenta} + f_{yellow}*E_{yellow}$$

is calculated for the pixels of the region of the image from the intensity values,
where $f_{red}$, $f_{green}$, $f_{blue}$, $f_{cyan}$, $f_{magenta}$, $f_{yellow}$
are weighting factors, or
wherein the gray scale mask is calculated in that the gray scale

$$E = \max(f_{red}*E_{red}, f_{green}*E_{green}, f_{blue}*E_{blue}, f_{cyan}*E_{cyan}, f_{magenta}*E_{magenta}, f_{yellow}*E_{yellow})$$

is respectively calculated for the pixels of the region of the image from the intensity values,
where $f_{red}$, $f_{green}$, $f_{blue}$, $f_{cyan}$, $f_{magenta}$, $f_{yellow}$
are weighting factors.

2. The method in accordance with one of the preceding claims,
wherein the feature has the colors green and magenta or red and blue.

3. The method in accordance with one of the two preceding claims,
wherein the weighting factors of those colors that are not present in the feature area set as equal to zero.

4. The method in accordance with one of the preceding claims,
wherein the weighting factors are fixed in a prior calibrating step in which the scene is recorded with the camera such that the image of the at least one feature only has those primary colors that are colors of the feature and the weighting factors are fixed such that all the colors that are colors of the feature have an equal intensity distribution on a use of the respective weighting factor.

5. The method in accordance with one of the preceding claims,
wherein an object recognition is performed in the gray scale mask by which it is determined which region of the image recorded by the camera images the at least one feature of the scene; and
wherein a respective average of the corresponding color of all the pixels that are part of the region that images the at least one feature is calculated for those primary colors that are colors of the feature; and wherein the replacing content is replaced by means of chroma keying on the calculated averages of the primary colors.

6. The method in accordance with the preceding claim,
wherein the chroma keying is only performed in that region of the image that was determined as belonging to the image of the feature.

7. The method in accordance with one of the preceding claims,
wherein the camera is a video camera that records a plurality of frames and the method is carried out for each of the frames.

8. The method in accordance with claims 5 to 7,
wherein the average is calculated over a plurality of consecutive frames.

**Revendications**

1. Procédé de remplacement d'au moins un contenu graphique à remplacer par au moins un contenu graphique de remplacement dans au moins une image d'une scène prise par une caméra, l'au moins un contenu graphique à remplacer étant une représentation d'au moins une caractéristique de la scène, une couleur ou des couleurs de l'au moins une caractéristique étant au moins une couleur primaire,
dans lequel,
dans une première étape, au moins pour chaque couleur primaire, qui est une couleur de la caractéristique, un masque d'intensité est généré,
et dans une deuxième étape, à partir de tous les masques d'intensité générés dans la première étape, un masque de niveaux de gris est calculé,
et le contenu à remplacer est remplacé, en fonction du masque de niveaux de gris, dans l'image prise par la caméra, par le contenu à remplacer,
dans lequel, dans la première étape, les masques d'intensité pour les couleurs primaires, qui sont des couleurs de la caractéristique, sont générés grâce au fait que, pour les pixels d'au moins une zone de l'image de la caméra, des valeurs d'intensité

$$E_{rouge} = max(0, R - max(G,B))$$

$$E_{vert} = max(0, G - max(R,B))$$

$$E_{bleu} = max(0, B - max(R,G))$$

$$E_{cyan} = max(0, min(G,B) - R)$$

$$E_{magenta} = max(0, min(R,B) - G)$$

$$E_{jaune} = max(0, min(R,G) - B)$$

sont calculées

R étant une valeur de rouge, G une valeur de vert et B une valeur de bleu de l'image de la caméra dans le pixel correspondant,

le masque de niveaux de gris étant calculé grâce au fait que, pour les pixels de la zone de l'image, à partir des valeurs d'intensités, le niveau de gris

$$E = f_{rouge}*E_{rouge} + f_{vert}*E_{vert} + f_{bleu}*E_{bleu} + f_{cyan}*E_{cyan} + f_{magenta}*E_{magenta} + f_{jaune}*E_{jaune}$$

est calculé

$f_{rouge}, f_{vert}, f_{bleu}, f_{cyan}, f_{magenta}, f_{jaune}$

étant des facteurs de pondération, ou

le masque de niveaux de gris étant calculé grâce au fait que, pour les pixels de la zone de l'image, à partir des valeurs d'intensité, le niveau de gris

$$E = max(f_{rouge}*E_{rouge}, f_{vert}*E_{vert}, f_{bleu}*E_{bleu}, f_{cyan}*E_{cyan}, f_{magenta}*E_{magenta}, f_{jaune}*E_{jaune})$$

est calculé,

$f_{rouge}, f_{vert}, f_{bleu}, f_{cyan}, f_{magenta}, f_{jaune}$

étant des facteurs de pondération.

2. Procédé selon l'une des revendications précédentes,
la caractéristique comprenant les couleurs verte et magenta ou rouge et bleue.

3. Procédé selon l'une des revendications précédentes,
les facteurs de pondération des couleurs qui ne sont pas présentes dans la caractéristique étant mis à zéro.

4. Procédé selon l'une des revendications précédentes,
les facteurs de pondération étant déterminés dans une étape de calibrage précédente, dans laquelle la scène est prise avec la caméra de façon à ce que la représentation de l'au moins une caractéristique ne présente que les couleurs primaires qui sont les couleurs de la caractéristique, et les facteurs de pondération sont déterminés de façon à ce que toutes les couleurs qui sont les couleurs de la caractéristique présentent une répartition d'intensité identique lors de l'utilisation du facteur de pondération correspondant.

5. Procédé selon l'une des revendications précédentes,
dans lequel, dans le masque de niveaux de gris, une reconnaissance d'objet est effectuée, à l'aide de laquelle il est déterminé quelle zone de l'image prise par la caméra représente l'au moins une caractéristique de la scène et pour les couleurs primaires qui sont les couleurs de la caractéristique, une moyenne des couleurs correspondantes de tous les pixels qui font partie de la zone, qui représente l'au moins une caractéristique, est calculée et le contenu à remplacer est remplacé au moyen d'une incrustation (« chroma keying ») sur les moyennes calculées des couleurs primaires.

6. Procédé selon la revendication précédente,
le « chroma keying » n'étant effectué que dans la zone de l'image qui a été déterminée comme appartenant à la représentation de la caractéristique.

7. Procédé selon l'une des revendications précédentes,
la caméra étant une caméra vidéo qui prend une pluralité d'images et le procédé étant effectué pour chacune des images.

8. Procédé selon l'une des revendications 5 à 7,
la moyenne étant calculée sur une pluralité d'images successives.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2312348 A
- WO 2007097517 A
- DE 4492448
- WO 2012038009 A

**In der Beschreibung aufgeführte Nicht-Patentliteratur**

- **KEITH JACK.** Video Demystified - A Handbook for the Digital Engineer. Elsevier, 2007